# EUROPEAN PATENT APPLICATION

(11) **EP 3 766 834 A1**
(43) Date of publication of application: **20.01.2021**
(21) Application number: 19186978.3
(22) Date of filing: 18.07.2019
(51) Int. Cl.: C01B 33/22, C01B 33/24, C01F 5/24, C01F 11/18, C04B 7/36, C04B 14/04, C04B 14/28, C04B 20/02, B01D 53/62, C04B 28/10

(54) **PROCESS FOR CONVERTING HYDROCARBONS TO PRODUCTS**

(71) Applicant: SCW Systems B.V., 1812 RC Alkmaar (NL)
(72) Inventor: Essing, Gerardus Cornelus Otto Bernard, 1812 RC Alkmaar (NL); Lachman, Vikash Avinash, 1812 RC Alkmaar (NL); Knops, Paulus Carolus Marie, 1812 RC Alkmaar (NL)
(74) Representative: De Vries & Metman

(57) **Abstract**

The invention relates to a process comprising the steps of:
converting hydrocarbons to at least one molecular energy carrier and carbon dioxide,
reacting said carbon dioxide with a divalent metal-containing silicate to form solid divalent metal carbonate and silicate and
utilizing at least one of said carbonate and silicate in the production of construction- and/or chemical material.

## Description

The invention relates to a process converting hydrocarbons to products.

WO 2016/151120 relates to a method of and a system (1) for processing a slurry containing organic components, such as biomass, having a water contents of at least 50%, comprising a pump (6) and heater or heat exchanger (7) to bring the liquid in the slurry in a supercritical state, a reactor (8) to convert at least a part of the organic components in the slurry, and a separator (12) to remove gaseous products from the converted slurry, and comprising a mixer (5) for adding fluid from the converted slurry to the slurry upstream from the reactor (8).

It is an object of the present invention to provide an improved process.

To this end, the process according to the present invention comprises the steps of:
converting hydrocarbons to at least one molecular energy carrier, such as hydrogen and/or one or more hydrocarbons, such as methane, and/or heat and carbon dioxide,
reacting said carbon dioxide with a divalent metal-containing silicate to form solid divalent metal carbonate and silicate, e.g. solid, liquid, or a mixture(slurry) of solid and liquid silicate, and
utilizing at least one of said carbonate and silicate in the production of construction- and/or chemical material.

With the present invention a triple or double reduction or, ideally, a triple or double avoidance of carbon dioxide emissions can be achieved, namely by capturing the carbon dioxide, from the air or resulting from the production of molecular energy carriers, in solids and, in addition, avoiding carbon dioxide emission through the use of said solids as a replacement of construction and/or chemical material, the conventional production process of which material traditionally results in carbon dioxide emission.

In an embodiment, the process comprises the steps of
leaching the divalent metal containing silicate at a pH of below neutral to form divalent metal ions and silicate in the reaction mixture, then
increasing pH to react the divalent solution with carbon dioxide to form a solid divalent metal salt and/or silicate, and
reacting the solid divalent salt with carbon dioxide to form a solid divalent metal carbonate.

Thus, the solid and/or liquid products are formed using a pH-swing carbon dioxide mineralization process with a recyclable reaction solution.

The advantages of said pH swing process are a (near) complete dissolution of the divalent metal containing silicates, potential recovery of the components of the divalent metal containing silicates (silica and metals) and carbonation reaction of CO2 requiring less energy and a complete conversion towards carbonates.

The advantages of said recyclable process are that the amount of additives consumed are significantly less and the carbon footprint of the overall process significantly is reduced.)

In an embodiment, leaching is conducted at a pH in a range from 1 to below neutral, preferably in a range from <2 to <7, and a temperature in a range from >25 to <100 °C, preferably in a range from 25 to 50°C.

In another embodiment, the neutralizing step is conducted by addition of a base to increase the pH to 7 or above, preferably at a temperature in a range from >25 to <50 °C, and preferably at a pressure in a range from 0.5 to 3 bar, preferably in a range from 1 to 2 bar.

In another embodiment, the reaction of solid divalent salt with carbon dioxide is conducted at a pressure in a range from 5 to 50 bar, preferably in a range from 10 to 20 bar.

In an embodiment, carbon dioxide and the at least one molecular energy carrier are formed through at least one of a gasification process, preferably a supercritical water gasification process, a gas reforming process, partial oxidation, a fermentative gas production process, and an enzymatic gas production process.

In an embodiment, the hydrocarbons are at least one of organic material, such as biomass, coal, oil, plastics, and natural gas. Feedstocks containing organic components are a tremendous potential resource for providing energy and value-added products, especially in agricultural areas where waste biomass is abundant or where dedicated energy crops can be produced cheaply and efficiently.

In an example, waste biomass or sewage is converted by means of super critical water gasification to product, e.g. hydrogen and methane, and the resulting carbon dioxide is reacted with a divalent metal-containing silicate to form solid divalent metal carbonate and silicate, which subsequently is utilized in the production of construction- and/or chemical material, e.g. cement. Thus, useful products with higher economic value are made from waste, while providing triple carbon dioxide relief.

In an embodiment, the molecular energy carrier is hydrogen or a hydrocarbon, preferably a hydrocarbon with 1 to 24 carbon atoms, in particular methane or ethane/ ethylene.

To accelerate the reaction between carbon dioxide and the divalent metal-containing silicate and/or to improve controlling the process at relatively low temperatures, in an embodiment, the carbon dioxide is in a supercritical state, i.e. at a pressure in excess of 73 bar and a temperature in excess of 31 °C, or a subcritical state.

In an embodiment, at least part of the carbonate formed is separated and dried. Preferably, the solid divalent metal carbonate is at least one of calcium carbonate, iron carbonate and/or magnesium carbonate.

In an embodiment, at least part of the silicate formed is separated and dried to form fumed silica, nano- or micro-silica.

In another embodiment, the divalent metal containing silicate is a silicate mineral, or nesosilicates or orthosilicates, having the orthosilicate ion, which constitute isolated silicon tetroxide anion (SiO4)4- which has a tetrahedral shape that are connected by divalent metals.

In yet another embodiment, the divalent metal containing silicate is at least one of olivine, wolstanite, serpentine, forsterite, and monticellite.

In another embodiment, all or part of the formed solids and/or liquid products is used
as cementitious material in at least one of geopolymer, cement, and hybrid (= ordinary portland cement "OPC" combined with non-OPC materials) cement, or
as a component in the production of at least one of paper, polymer, rubber, coatings, food, personal care products, and pharmaceuticals.

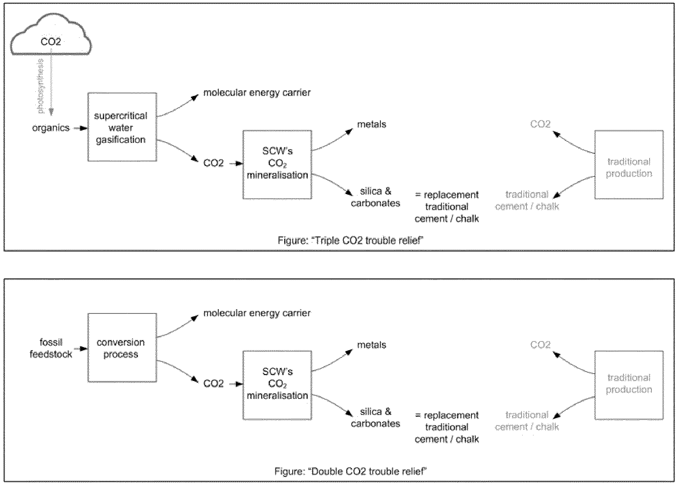

Philip Goldberg et al. "CO2 Mineral Sequestration Studies in US", Journal of Energy and Environmental Research (2001), explains that "Carbon sequestration by reacting naturally occurring Mg and Ca containing minerals with CO2 to form carbonates has many unique advantages. Most notably is the fact that carbonates have a lower energy state than CO2, which is why mineral carbonation is thermodynamically favorable and occurs naturally (e.g., the weathering of rock over geologic time periods). Secondly, the raw materials such as magnesium based minerals are abundant. Finally, the produced carbonates are unarguably stable and thus re-release of CO2 into the atmosphere is not an issue." A conceptual illustration of the process is presented in Figure 1 of Goldberg. "As illustrated, CO2 from one or more power plants is transported to a carbonation reactor, combined with crushed olivine or serpentine from a nearby mine and held at the appropriate reaction conditions until the desired degree of carbonation is reached. Then products of the reaction, which might be a slurry of carbonated minerals and residues in aqueous CO2, are separated. The CO2 is recycled, useful materials are collected and the carbonated materials and residue are returned to the mine site."

WO 2014/009802 relates to a process for producing magnesium carbonate by carbonating a magnesium silicate ore containing iron is disclosed. It is characterised by the step of contacting a slurry of the ore in water with a gaseous mixture comprising carbon dioxide and oxygen. The process is suitably carried out at elevated temperature and pressure wherein the gaseous mixture is in supercritical fluid form. It is particularly suitable for the processing of olivine and serpentine ores wherein iron is present in the +2 oxidation state. The process also optionally comprises the separation of silica and/or discrete iron oxide or hydroxide phases(s) co-produced with the magnesium carbonate. Also disclosed are downstream processes for converting the magnesium carbonate into magnesium oxide and compositions derived therefrom having cementitious properties. Cement products and concrete building materials produced from these compositions have useful structural properties and have a low carbon footprint relative to traditional Portland cement.

Within the framework of the present invention the term "molecular energy carrier" is defined as a substance, in particular a fuel or an intermediate for synthetic compounds, such a polymers, having the potential to release energy through a chemical reaction, such as oxidation or hydrogenation.

The name "silicate" is used to mean silicate minerals, ionic solids with silicate anions, as well as rock types that consist predominantly of such minerals. In this context, the term also includes the non-ionic compound silicon dioxide (silica, quartz).

The term "supercritical" refers to a temperature and pressure condition in which at least part of the processing liquid reaches or exceeds its critical point and becomes a fluid with unique properties. The resulting fluid has a density between that of its vapour and its liquid phase at standard conditions and exhibits high gas-like diffusion rates along with liquid-like solvation behaviour. In the case of water this means that hydrocarbons, for example, can become soluble in the water and salts might precipitate out of solution. The term "subcritical" includes conditions which are just below supercritical, where the liquid does not retain 'normal' liquid properties but is also not yet fully supercritical.

The invention is not restricted to the above-described embodiments, which can be varied in a number of ways within the scope of the claims.

## Claims

1. Process comprising the steps of:
converting hydrocarbons to at least one molecular energy carrier and/or heat and carbon dioxide,
reacting said carbon dioxide with a divalent metal-containing silicate to form solid divalent metal carbonate and silicate and
utilizing at least one of said carbonate and silicate in the production of construction- and/or chemical material.

2. Process according to claim 1, comprising the steps of
leaching the divalent metal containing silicate at a pH of below neutral to form divalent metal ions and silicate in the reaction mixture, then
increasing pH to react the divalent solution with carbon dioxide to form a solid divalent metal salt and/or silicate, and
reacting the solid divalent salt with carbon dioxide to form a solid divalent metal carbonate.

3. Process according to claim 2, wherein leaching is conducted at a pH in a range from 1 to below neutral, preferably in a range from <2 to <7, and a temperature in a range from >25 to <100 °C, preferably in a range from 25 to 50°C.

4. Process according to claim 2 or 3, wherein the neutralizing step is conducted by addition of a base to increase the pH to 7 or above, preferably at a temperature in a range from >25 to <50 °C, and preferably at a pressure in a range from 0.5 to 3 bar, preferably in a range from 1 to 2 bar.

5. Process according to any one of the claims 2-4, wherein the reaction of solid divalent salt with carbon dioxide is conducted at a pressure in a range from 5 to 50 bar, preferably in a range from 10 to 20 bar.

6. Process according to any one of the preceding claims, wherein carbon dioxide and the at least one molecular energy carrier are formed through at least one of a gasification process, preferably a supercritical water gasification process,
a gas reforming process,
partial oxidation,
a fermentative gas production process, and
an enzymatic gas production process.

7. Process according to any one of the preceding claims, wherein the hydrocarbons are at least one of organic material, such as biomass, coal, oil, plastics, and natural gas.

8. Process according to any one of the preceding claims, wherein the molecular energy carrier is hydrogen or a hydrocarbon.

9. Process according to any one of the preceding claims, wherein the carbon dioxide is in a supercritical state or a subcritical state.

10. Process according to any one of the preceding claims, wherein at least part of the carbonate formed is separated and dried.

11. Process according to claim 10, wherein the solid divalent metal carbonate is at least one of calcium carbonate, iron carbonate and/or magnesium carbonate.

12. Process according to any one of the preceding claims, wherein at least part of the silicate formed is separated and dried to form fumed silica, nano- or micro-silica.

13. Process according to any of the preceding claims, wherein the divalent metal containing silicate is a silicate mineral, or nesosilicates or orthosilicates, having the orthosilicate ion, which constitute isolated silicon tetroxide anion (SiO4)4- which has a tetrahedral shape that are connected by divalent metals.

14. Process according to claim 13, wherein the divalent metal containing silicate is at least one of olivine, wolstanite, serpentine, forsterite, and monticellite.

15. Process according to any of the preceding claims, wherein all or part of the formed solids and/or liquid products is used
as cementitious material in at least one of geopolymer, cement, and hybrid cement, or
as a component in the production of at least one of paper, polymer, rubber, coatings, food, personal care products, and pharmaceuticals.
